# EUROPEAN PATENT SPECIFICATION

(11) **EP 0 761 950 B1**
(45) Date of publication and mention of the grant of the patent: **26.07.2000**
(21) Application number: 96114477.1
(22) Date of filing: 10.09.1996
(51) Int. Cl.: F02D 13/02

(54) **A valve timing control device for an internal combustion engine**
Ventilsteuervorrichtung für eine Brennkraftmaschine
Dispositif de commande du calage des soupapes pour un moteur à combustion interne

(30) Priority: 12.09.1995 JP 23382095
(43) Date of publication of application: 12.03.1997
(73) Proprietor: TOYOTA JIDOSHA KABUSHIKI KAISHA, Aichi-ken (JP)
(72) Inventor: Kobashi, Kiyoshi, Toyota-shi, Aichi (JP); Ohki, Hisashi, Toyota-shi, Aichi (JP); Nakamura, Norihiko, Toyota-shi, Aichi (JP)
(74) Representative: Winter, Brandl, Fürniss, Hübner, Röss, Kaiser, Polte Partnerschaft

(56) References cited:
- EP-A- 0 319 956
- WO-A-93/22549
- DE-C- 4 342 296
- GB-A- 2 134 596
- GB-A- 2 274 878
- JP-A- 7 109 934
- US-A- 4 114 643

## Description

### BACKGROUND OF THE INVENTION

### 1. Field of the Invention

The present invention relates to a valve timing control device for an internal combustion engine.

### 2. Description of the Related Art

In a diesel engine, it is desired that a compression ratio is made low to reduce a total weight and noise of the engine. However, such a low compression ratio causes white smoke before the engine is warmed up, because a temperature of compressed intake air does not become high enough to ignite an injected fuel satisfactorily.

Japanese Unexamined Patent Publication No. 3-172575 discloses that to solve this problem and to realize a low compression ratio, a variable valve timing control mechanism is provided with exhaust valve system, and when the engine has not warmed up, an exhaust valve close timing is advanced before the exhaust top dead center so that a part of high temperature exhaust gas remains in the cylinder and thus a temperature of compressed intake air is made high by use of the heat of the exhaust gas.

In a usual engine, to increase the trapping efficiency and the scavenging efficiency, the valve overlap, during which the intake valve and the exhaust valve are opened simultaneously at the end of an exhaust stroke, is carried out so that an intake valve open timing is set before the exhaust top dead center and an exhaust valve close timing is set after the exhaust top dead center. Therefore, in the above No. 3-172575, if the exhaust valve is closed before the exhaust top dead center when the engine has not warmed up, a part of exhaust gas remained in the cylinder flows out into the intake port while the intake valve is opened in an exhaust stroke. The exhaust gas flowed out into the intake port returns into the cylinder during the intake stroke. However, the exhaust gas is cooled by the intake port so that the temperature of the compressed intake air does not become as high as expected.

JP-A-7019934 which corresponds to US-A-5497737 relates to the control of intake and exhaust valves of an internal combustion engine in order to improve the performance of the internal combustion engine. As it is appreciated from these documents, on the basis of the operating condition of the internal combustion engine, an intake variable valve timing mechanism is operated to move the opening and closing timings of the intake valve with the opening duration of the intake valve unaltered, and an exhaust valve variable valve timing mechanism is operated to alter the opening duration of the exhaust valve. Under a low load operating condition of the internal combustion engine, for example, it is suggested retarding the opening timing of the exhaust valve and advancing the closing timing of the exhaust valve with respect to the opening and closing timings of the exhaust valve under a high speed operating condition of the internal combustion engine, while maintaining the opening and closing timings of the intake valve with respect to the opening and closing timings of the intake valve under a high speed operating condition of the internal combustion engine.

GB-A-2274878 relates to the control of engine valve timing during cold starting and cold running of an internal combustion engine. In particular, this document teaches to advance the opening times of the intake valves when the engine is operating below a predetermined temperature so as to prolong the period during which the intake valves are open at the end of the engine exhaust strokes, for the purpose of providing a flow of exhaust gases into the intake port so as to improve charge preparation within the intake port. The closing times of the exhaust valves may also be advanced.

### SUMMARY OF THE INVENTION

Therefore, an object of the present invention is to provide a valve timing control device for an internal combustion engine, which can make the temperature of the compressed gas sufficiently high when the temperature within the cylinder of the engine is low.

This object is solved by the valve timing control device in accordance with claim 1. Claim 2 defines an embodiment thereof.

The present invention will be more fully understood from the description of the preferred embodiments of the invention set forth below, together with the accompanying drawings.

### BRIEF DESCRIPTION OF THE DRAWINGS

In the drawings:
Fig. 1 is a schematic view of a diesel engine with a valve timing control device, according to the present invention;
Fig. 2 is a flow chart for controlling the intake and exhaust valve timings via a variable valve timing control mechanism by an electronic control unit;
Fig. 3 is a view for explaining the intake and exhaust valve timings control;
Fig. 4 is a map for determining a control value (b) for the exhaust valve close timing; and
Fig. 5 is a view for explaining a variable valve timing control mechanism in case of an engine with four valves for every cylinder.

### DESCRIPTION OF THE PREFERRED EMBODIMENTS

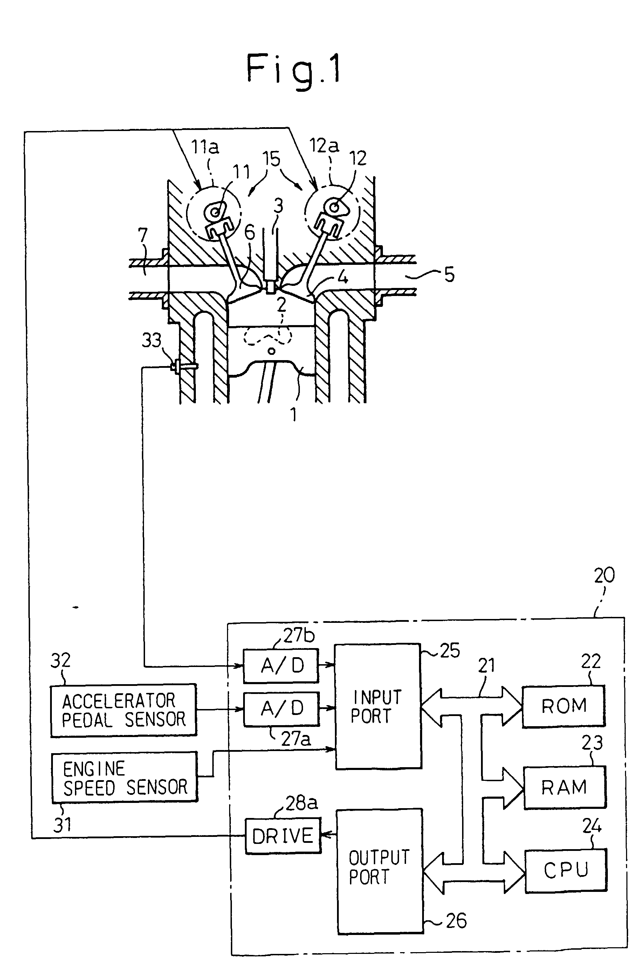

Figure 1 is a schematic view of a diesel engine with a valve timing control device according to the present invention. In this figure, reference numeral 1 designates a piston. Reference numeral 2 designates a combustion chamber formed on the upper surface of the piston 1. Reference numeral 3 designates a fuel injection nozzle for injecting fuel into the combustion chamber 2. An exhaust port 5 and an intake port 7 are connected to the cylinder via an exhaust valve 4 and an intake valve 6, respectively. In the diesel engine, the compression ratio is made low to reduce a total weight and noise of the engine.

A cam-shaft 11 for the intake valve 6 is connected to a crank-shaft by a pulley 11a arranged on the end of the cam-shaft 11, via a belt or the like. The pulley 11a is connected to a pulley 12a arranged on the end of a cam-shaft 12 for the exhaust valve, via a belt or the like, whereby, the two cam-shafts 11, 12 are driven rotationally by the crank-shaft and thus the intake valve 6 and the exhaust valve 4 are opened or are closed.

The two cam-shafts 11, 12 are provided with a known variable valve timing control mechanism 15. The mechanism 15 makes the pulley 11a, 12a rotate relative to the cam-shaft 11, 12. For example, one variable valve timing control mechanism comprises an intermediate gear which has outer and inner helical teeth, and which connects the cam-shaft with the pulley. When the intermediate gear is moved axially by oil pressure, electromagnetic force, and the like, the cam-shaft is rotated relative to the pulley. Thus, intake valve open and close timings and exhaust valve open and close timings can be freely varied by each variable valve timing control mechanism.

Reference numeral 20 designates an electronic control unit (ECU) for controlling the intake valve timing and the exhaust valve timing via the variable valve timing control mechanism 15. The ECU 20 is constructed as a digital computer and includes a ROM (read only memory) 22, a RAM (random access memory) 23, a CPU (microprocessor, etc.) 24, an input port 25, and an output port 26. The ROM 22, the RAM 23, the CPU 24, the input port 25, and the output port 26 are interconnected by a bidirectional bus 21.

An engine speed sensor 31 which produces an output pulse for detecting the engine speed is connected to the input port 25. An accelerator pedal sensor 32 produces an output voltage which is proportional to the movement of the accelerator pedal (not shown) as the engine load, and this output voltage is input into the input port 25 via an AD converter 27a. A coolant temperature sensor 33 produces an output voltage which is proportional to the temperature of the cooling water of the engine as the engine temperature, and this output voltage is input into the input port 25 via an AD converter 27b. The output port 26 is connected to the variable valve timing control mechanism 15 via drive circuits 28a.

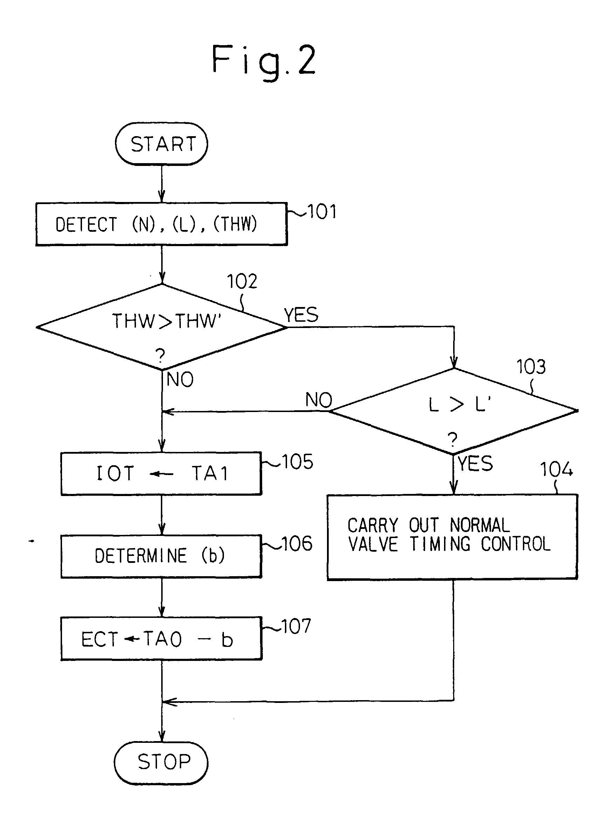

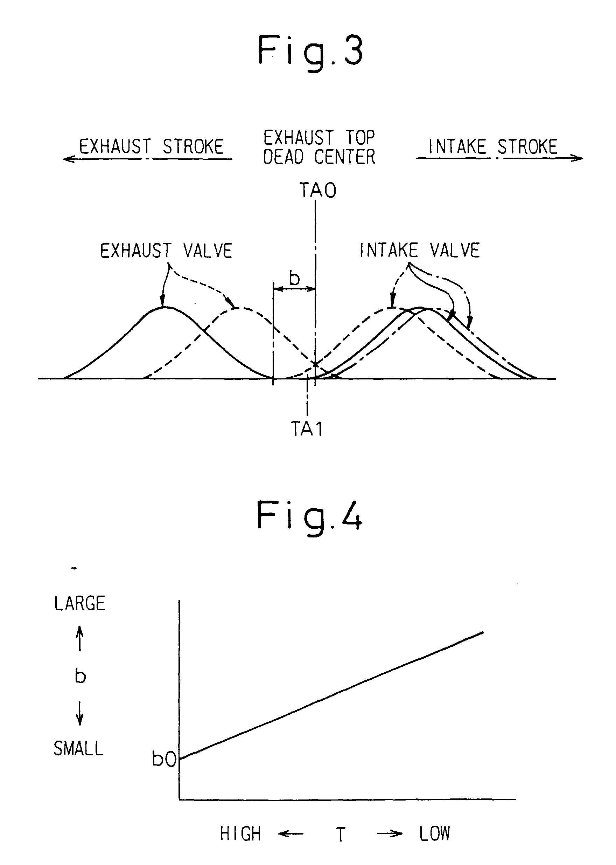

The ECU 20 controls the intake valve timing and the exhaust valve timing via the variable valve timing control mechanism 15, according to a flow chart shown in Figure 2. First, at step 101, the current engine speed (N), the current engine load (L), and the current temperature of the cooling water (THW) are detected by the above three sensors 31, 32, 33, respectively. Next, at step 102, it is determined if the current temperature of the cooling water (THW) is higher than a predetermined temperature (THW'). When the result is positive, i.e., the engine has warmed up, the routine goes to step 103 and it is determined if the current engine load (L) is larger than a predetermined engine load (L'). When the result is positive, i.e., the engine has warmed up and the temperature of combustion becomes high due to the large amount of fuel injected and thus the temperature within the cylinder is high, the routine goes to step 104 and a normal valve timing control for the intake valve and the exhaust valve is carried out. The normal valve timing control is, for example, to control the exhaust valve close timing (ECT) and the intake valve open timing (IOT) such that the higher the engine speed is, the longer the valve overlap period becomes, via the variable valve timing control mechanism 15. In this case, as shown by dotted lines in Figure 3, the exhaust valve close timing (ECT) becomes after the crank angle of the exhaust top dead center (TA0), and the intake valve open timing (IOT) becomes before the crank angle (TA0).

On the other hand, when the result at step 102 is negative, i.e., the engine has not warmed up, or when the result at step 103 is negative, i.e., a temperature of combustion is low due to the small amount of fuel injected, the routine goes to step 105 and the intake valve open timing (IOT) is set at a predetermined timing (TA1), which is immediately before the crank angel of the exhaust top dead center (TA0), as shown by a solid line in Figure 3. Next, the routine goes to step 106 and a control value (b) for the exhaust valve close timing is determined from a map shown in Figure 4, on the basis of the temperature (T) within the cylinder of the engine. In the map, a control value (b) is set such that the lower the temperature (T) within the cylinder is, the larger the control value becomes. The temperature (T) within the cylinder can be assumed on the basis of the temperature (THW) of the cooling water and/or the temperature of combustion, i.e., the amount of fuel injected. When the temperature (THW) of the cooling water is the predetermined temperature (THW') and the engine load (L) is the predetermined engine load (L'), the control value (b) becomes a minimum value (b0). Next, the routine goes to step 107, and the exhaust valve close timing (ECT) is set by subtracting the control value (b) from the crank angle (TA0) of the exhaust top dead center, as shown by a solid line in Figure 3. The set exhaust valve close timing (ECT) becomes before the set intake valve open timing (IOT).

Therefore, when the temperature within the cylinder is low, the intake valve 6 is still not opened after the exhaust valve 4 is closed in the exhaust stroke, so that the exhaust gas does not flow out into the intake port 7 and remains within the cylinder. Thereafter, intake air is supplied to the cylinder in the intake stroke. Once the intake air and the exhaust gas remained in the cylinder are compressed in the compression stroke, the temperature of the gas in the cylinder becomes sufficiently high by use of heat of the retained exhaust gas so that fuel injected by the fuel injection nozzle 3 in the combustion chamber 2 can be ignited satisfactorily. The intake valve open timing (IOT) may be set after the predetermined timing (TA1) which is immediately before the crank angle (TA0) of the exhaust top dead center, as shown by a chain line in figure 3. However, in the above-mentioned variable valve timing control mechanism, if the intake valve open timing (IOT) is made too late, the intake valve close timing is also too late so that an amount of intake air is reduced considerably.

Thus, a diesel engine of a low compression ratio can be prevented from producing white smoke when the temperature within the cylinder is low. Moreover, the exhaust gas remained in the cylinder has a large capacity so that the combustion temperature is lowered and thus the amount of NOₓ in the exhaust gas can be reduced.

However, on the other hand, the exhaust gas remained in the cylinder causes the deterioration of combustion. Accordingly, if the ignition of the fuel is ensured, it is desirable that an amount of exhaust gas remained in the cylinder is made small. According to the above flow chart, the higher the temperature of the cooling water (THW) is, i.e., the easier the ignition of the fuel becomes, the smaller the control value (b) becomes. As a result, the exhaust valve close timing (ECT) is close to the crank angle of the exhaust top dead center and thus the amount of exhaust gas remained in the cylinder is made small.

Instead of the above-mentioned variable valve timing control mechanism 15, a fluid cylinder type variable valve timing control mechanism may be used. The mechanism comprises a fluid cylinder arranged between the cam and the valve, and can control freely the valve open and close timings by controlling to charge fluid to the fluid cylinder or to discharge fluid therefrom. In this case, the intake valve close timing and the exhaust valve open timing are fixed to the appropriate timings, and the intake valve open timing (IOT) and the exhaust valve close timing (ECT) may be controlled as the above.

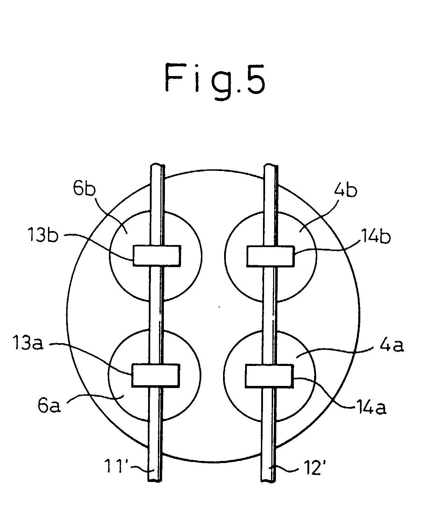

Figure 5 shows variable valve timing control mechanism in case of the engine with four valves for every cylinder. In this figure, reference numeral 6a, 6b are first and second intake valves, and reference numeral 4a, 4b are first and second exhaust valves. A cam 13a for the first intake valve 6a and a cam 13b for the second intake valve 6b are arranged on a cam-shaft 11' via lock devices (not shown), respectively. A cam 14a for the first exhaust valve 4a and a cam 14b for the second exhaust valve 4b are arranged on a cam-shaft 12' via lock devices (not shown), respectively. The cam 13a for the first intake valve 6a and the cam 14a for the first exhaust valve 4a are suitable to realize the normal valve overlap period. The cam 13b for the second intake valve 6b and the cam 14b for the second exhaust valve 4b are suitable to realize a predetermined intake valve open timing which is the crank angle of the exhaust top dead center and a predetermined exhaust valve close timing before the crank angle of the top dead center. When the temperature within the cylinder is high, the cams 13a, 14a are fixed on the cam-shafts 11', 12' and the cam 13b, 14b are freed on the cam-shafts 11', 12' by the lock devices. When the temperature within the cylinder is low, the cams 13b, 14b are fixed on the cam-shafts 11', 12' and the cam 13a, 14a are freed on the cam-shafts 11', 12' by the lock devices. Therefore, the above-mentioned effects can be obtained.

Finally, the present invention is not limited to the diesel engine and can be utilized in a spark ignition engine. Also in a spark ignition engine, when a temperature within the cylinder is low, if a temperature of air-fuel mixture is made high, the ignition becomes good.

Although the invention has been described with reference to specific embodiments thereof, it should be apparent that numerous modifications can be made thereto by those skilled in the art without departing from the basic concept and scope of the invention as defined in the appended claims.

## Claims

1. A valve timing control device for an internal combustion engine comprising:
a variable valve timing control mechanism (15) for varying an intake valve open timing (IOT) and an exhaust valve close timing (ECT); and
control means (20) for controlling the variable valve timing control mechanism (15) such that, when the temperature (T) within the cylinder of the engine is low, the exhaust valve close timing (ECT) is made a predetermined close timing to leave a part of exhaust gas in the cylinder and the intake valve open timing (IOT) is made a predetermined open timing to substantially avoid said exhaust gas left in the cylinder flowing out into the intake port, wherein
said predetermined close timing is before the exhaust valve close timing (ECT) which is set when the temperature (T) within the cylinder of the engine is high, and before the exhaust top dead center (TA0), and
said predetermined open timing is after the intake valve open timing (IOT) which is set when the temperature (T) within the cylinder of the engine is high, after said predetermined close timing and after a timing which is immediately before the exhaust top dead center (TA0).

2. A valve timing control device according to claim 1, wherein said control means (20) controls such that the lower the temperature (T) within said cylinder is, the earlier said predetermined close timing is.

## Patentansprüche

1. Ventilsteuerzeiten-Steuervorrichtung für eine Brennkraftmaschine, welche aufweist:
einen variablen Ventilsteuerzeiten-Steuermechanismus (15) zum Variieren einer Einlaßventil-Öffnungssteuerzeit (IOT) and einer Auslaßventil-Schließsteuerzeit (ECT); und
eine Steuereinrichtung (20) zum Steuern des variablen Ventilsteuerzeiten-Steuermechanismus (15) derart, daß die Auslaßventil-Schließsteuerzeit (ECT) zu einer vorgegebenen Schließsteuerzeit gemacht wird, um einen Teil des Abgases im Zylinder zu belassen, wenn die Temperatur (T) im Inneren des Zylinders des Motors niedrig ist, und die Einlaßventil-Öffnungssteuerzeit (IOT) zu einer vorgegebenen Öffnungssteuerzeit gemacht wird, um im wesentlichen zu verhindern, daß das im Zylinder verbliebene Abgas in den Ansaugkanal ausströmt, wobei
die vorgegebene Schließsteuerzeit vor derjenigen Auslaßventil-Schließsteuerzeit (ECT) liegt, die eingestellt ist, wenn die Temperatur (T) im Inneren des Zylinders des Motors hoch ist, und vor dem oberen Auslaßtotpunkt (TA0), und
die vorgegebene Öffnungssteuerzeit nach derjenigen Einlaßventil-Öffnungssteuerzeit (IOT) liegt, die eingestellt ist, wenn die Temperatur (T) im Inneren des Zylinders des Motors hoch ist, nach der vorgegebenen Schließsteuerzeit, und nach einer Steuerzeit, die unmittelbar vor dem oberen Auslaßtotpunkt (TA0) liegt.

2. Ventilsteuerzeiten-Steuervorrichtung für eine Brennkraftmaschine gemäß Anspruch 1, bei der die Steuereinrichtung (20) derart steuert, daß die vorgegebene Schließsteuerzeit umso früher ist, je niedriger die Temperatur (T) im Zylinder ist.

## Revendications

1. Un dispositif de commande du calage des soupapes pour un moteur à combustion interne, comprenant:
un mécanisme (15) de commande de calage variable des soupapes, pour faire varier le calage temporel d'ouverture des soupapes d'admission (I0T) et le calage temporel de fermeture des soupapes d'échappement (ECT); et
des moyens de commande (20) pour commander le mécanisme (15) de commande de calage variable des soupapes de manière que, lorsque la température (T) dans le cylindre du moteur à combustion interne est faible, le calage temporel de fermeture des soupapes d'échappement (ECT) soit un calage temporel de lèrmeture prédéterminé, pour laisser une partie des gaz d'échappement dans le cylindre, et le calage temporel d'ouverture des soupapes d'admission (IOT) soit un calage temporel d'ouverture prédéterminé, pour pratiquement éviter que lesdits gaz d'échappement restés dans le cylindre ne s'écoulent pour s'échapper dans l'orifice d'admission, dans lequel :
ledit calage temporel de fermeture prédéterminé est en avance sur le calage temporel de fermeture de soupape d'échappement (ECT) qui est fixé lorsque la température (T) dans le cylindre du moteur à combustion interne est élevée, et en avance sur le point mort haut d'échappement (TAO), et
ledit calage temporel d'ouverture prédéterminé est en retard sur le calage temporel d'ouverture des soupapes d'admission (IOT), qui est fixé lorsque la température (T) dans le cylindre du moteur à combustion interne est élevée, en retard sur ledit calage temporel de fermeture prédéterminé et en retard sur un calage temporel situé immédiatement avant le point mort haut d'échappement (TAO).

2. Un dispositif de commande du calage des soupapes selon la revendication 1, dans lequel la commande exercée par lesdits moyens de commande (20) est telle que plus la température (T) dans ledit cylindre est réduite, plus ledit calage temporel de fermeture prédéterminé est précoce.
